# EUROPEAN PATENT APPLICATION

(11) **EP 4 318 782 A1**
(43) Date of publication of application: **07.02.2024**
(21) Application number: 22775898.4
(22) Date of filing: 09.02.2022
(51) Int. Cl.: H01M 50/531, H01M 50/538, H01M 50/179, H01M 50/342, H01M 50/152, H01M 50/559, H01M 50/167, H01M 50/107

(54) **SECONDARY BATTERY**

(30) Priority: 24.03.2021 KR 20210038241
(71) Applicant: Samsung SDI Co., Ltd., Yongin-si, Gyeonggi-do 17084 (KR)
(72) Inventor: KIM, Myung Seob, Yongin-si, Gyeonggi-do 17084 (KR); PARK, Gun Gue, Yongin-si, Gyeonggi-do 17084 (KR); LEE, Won Sug, Yongin-si, Gyeonggi-do 17084 (KR); JEONG, Eui Kwang, Yongin-si, Gyeonggi-do 17084 (KR); JEONG, Hyun Ki, Yongin-si, Gyeonggi-do 17084 (KR)
(74) Representative: Marks & Clerk LLP
(86) International application number: PCT/KR2022/001944
(87) International publication number: WO 2022/203196

(57) **Abstract**

A technical object to be solved according to the present disclosure is to provide a secondary battery which has reduced electrical resistance by directly connecting an electrode assembly to a can and/or a terminal without lead tabs and also has an increased battery capacity by removing lead tabs. To this end, the present disclosure provides a secondary battery comprising: a can; an electrode assembly accommodated in the can and including a first uncoated portion extending in a first direction and a second uncoated portion extending in a second direction opposite to the first direction; a first current collector plate electrically connected to the first uncoated portion of the electrode assembly; a first terminal portion coupled to the can and electrically connected to the first current collector plate; and a second terminal portion coupled to the can and electrically connected to the second uncoated portion of the electrode assembly.

## Description

### TECHNICAL FIELD

An embodiment of the present disclosure relates to a secondary battery.

### BACKGROUND ART

In general, a secondary battery may include an electrode assembly, a can that accommodates the electrode assembly and an electrolyte, and a terminal portion that is coupled to an upper opening of the can to seal the can and to charge or discharge the electrode assembly.

In addition, the secondary battery may include a prismatic battery, a pouch-type battery, and a cylindrical battery depending on the shape. Specifically, in the cylindrical battery, after an upper substrate (e.g., an uncoated portion or inner tab) of an electrode assembly is exposed in order to reduce electrical resistance, a current collector plate is welded to the exposed upper substrate, and lead tabs are welded to the current collector plate in order to connect the current collector plate and the terminal portion.

However, such a secondary battery has a limit in reducing electrical resistance due to the lead tabs, and also has a limit in increasing battery capacity because the inner space of the can is reduced due to the lead tabs.

The above information disclosed in this Background section is only for enhancement of understanding of the background of the invention and therefore it may contain information that does not constitute prior art.

### DESCRIPTION OF EMBODIMENTS

### TECHNICAL PROBLEM

The present disclosure provides a secondary battery capable of reducing electrical resistance by directly connecting an electrode assembly to a can and/or a terminal portion without a lead tab and increasing battery capacity by removing the lead tab.

### SOLUTION TO PROBLEM

An exemplary secondary battery according to the present disclosure may include: a can; an electrode assembly accommodated in the can and including a first uncoated portion extending in a first direction and a second uncoated portion extending in a second direction opposite to the first direction; a first current collector plate electrically connected to the first uncoated portion of the electrode assembly; a first terminal portion coupled to the can and electrically connected to the first current collector plate; and a second terminal portion coupled to the can and electrically connected to the second uncoated portion of the electrode assembly.

In this way, in the present disclosure, by providing a secondary battery in which an electrode assembly is directly electrically connected to a current collector plate and/or a terminal portion without a separate lead tab, the internal resistance of secondary battery can be reduced, and a relatively large electrode assembly can be used to increase the battery capacity.

In some examples, the first terminal portion may include a cap-up, the can may further include a can curling portion provided in an inward direction, and the first current collector plate may further include a current-collector-plate curling portion provided in an inward direction between the can curling portion and the cap-up.

In this way, an embodiment of the present invention provides a secondary battery in which the first terminal portion is finished by the can curling portion and the current-collector-plate curling portion without a separate beading part, thereby simplifying the secondary battery manufacturing process. In addition, an embodiment of the present invention provides a secondary battery in which the first current collector plate is interposed between the can curling portion and the cap-up and electrically connected to the first terminal portion and the can, thereby reducing the internal resistance of battery.

In some examples, the current-collector-plate curling portion may cover a bottom surface of the cap-up, a side surface of the cap-up, and an upper surface of the cap-up.

In this way, an embodiment of the present invention provides a secondary battery in which a curling portion of a current collector plate electrically contacts at least three surfaces of a cap-up, thereby reducing the internal resistance of secondary battery.

In some examples, the current-collector-plate curling portion may be exposed to the outside of the can and the cap-up.

In this way, an embodiment of the present invention provides a secondary battery in which a gap between the first current collector plate and the cap-up or a gap between the first current collector plate and the can is relatively long, and thus it is difficult for foreign matter to penetrate into the inside of the can through these gaps, and it is also difficult for the electrolyte inside the can to leak out, thereby improving battery safety and reliability.

In some examples, the cap-up may include a vent notch formed on a bottom surface.

In this way, an embodiment of the present invention provides a secondary battery in which a vent notch is formed on the bottom surface of the cap-up, and thus, when the internal pressure of the secondary battery is greater than a reference pressure, the vent notch is broken so that the internal pressure of the secondary battery is equal to atmospheric pressure, thereby improving battery safety and reliability.

In some examples, the first terminal portion may be a negative electrode or a positive electrode.

In this way, an embodiment of the present invention provides a secondary battery in which the first terminal portion can be used as a negative electrode or a positive electrode, thereby providing various types of batteries according to the needs of electronic devices.

In some examples, the first terminal portion may include a cap-up, the cap-up may further include a cap-up seaming portion provided in an outward direction, the can may further include a can seaming portion provided in an outward direction of an end portion, and the first current collector plate may further include a current-collector-plate seaming portion provided in an outward direction between the cap-up seaming portion and the can seaming portion.

In this way, an embodiment of the present invention provides a secondary battery in which all of a cap-up seaming portion, a cap seaming portion, and a current-collector-plate seaming portion are provided, thereby improving the airtightness of the inside of the can even without a conventional insulating gasket or sealing.

In some examples, the current-collector-plate seaming portion may cover an inner surface of the can seaming portion, a side surface of the can seaming portion, and an outer surface of the can seaming portion.

In this way, an embodiment of the present invention provides a secondary battery in which a current-collector-plate seaming portion electrically contacts at least three faces of the can seaming portion, thereby reducing the internal resistance of the secondary battery.

In some examples, the cap-up seaming portion may cover an inner surface of the current-collector-plate seaming portion, a side surface of the current-collector-plate seaming portion, and an outer surface of the current-collector-plate seaming portion.

In this way, an embodiment of the present invention provides a secondary battery in which the cap-up seaming portion electrically contacts at least three faces of the current-collector-plate seaming portion, thereby reducing the internal resistance of the secondary battery.

In some examples, the second terminal portion may include a current collecting surface having an area corresponding to that of the second non-coated portion of the electrode assembly, a pillar portion extending from the current collecting surface and penetrating the can, and a terminal surface extending from the pillar portion and located outside the can.

In this way, an embodiment of the present invention provides a secondary battery in which the uncoated portion of the electrode assembly is directly electrically connected to the second terminal portion, thereby further reducing the internal resistance of the secondary battery.

In some examples, an insulating portion interposed between the second terminal portion and the can may be further included.

In this way, an embodiment of the present invention provides a secondary battery in which an insulating portion interposed between the second terminal portion and the can is included, thereby preventing an electrical short between the second terminal portion and the can.

In some examples, the second terminal portion may be a negative electrode or a positive electrode.

In this way, an embodiment of the present invention provides a secondary battery in which the second terminal portion can be used as a positive electrode or a negative electrode, thereby providing various types of batteries according to the needs of electronic devices.

### ADVANTAGEOUS EFFECTS OF DISCLOSURE

The present disclosure provides a secondary battery capable of reducing electrical resistance by directly connecting an electrode assembly to a can and/or a terminal without a lead tab, and increasing battery capacity by removing the lead tab.

### BRIEF DESCRIPTION OF DRAWINGS

FIGS. 1A and 1B are a perspective view and a cross-sectional view illustrating an exemplary secondary battery according to the present disclosure.
FIGS. 2A and 2B are enlarged cross-sectional views illustrating a first terminal portion and a second terminal portion of an exemplary secondary battery according to the present disclosure.
FIG. 3 is an enlarged cross-sectional view illustrating a terminal portion that can be applied to a positive electrode terminal or a negative electrode terminal of an exemplary secondary battery according to the present disclosure.

### BEST MODE

Examples of the present disclosure are provided to more completely explain the present disclosure to those skilled in the art, and the following examples may be modified in various other forms. The present disclosure, however, may be embodied in many different forms and should not be construed as being limited to the example (or exemplary) embodiments set forth herein. Rather, these example embodiments are provided so that this invention will be thorough and complete and will convey the aspects and features of the present disclosure to those skilled in the art.

In addition, in the accompanying drawings, sizes or thicknesses of various components are exaggerated for brevity and clarity, and like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the invention. As used herein, the singular forms are intended to include the plural forms as well, unless the context clearly indicates otherwise. It will be further understood that the terms that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the exemplary term "below" can encompass both an orientation of above and below.

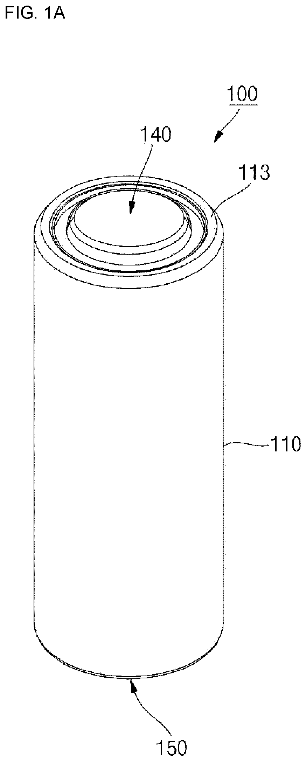

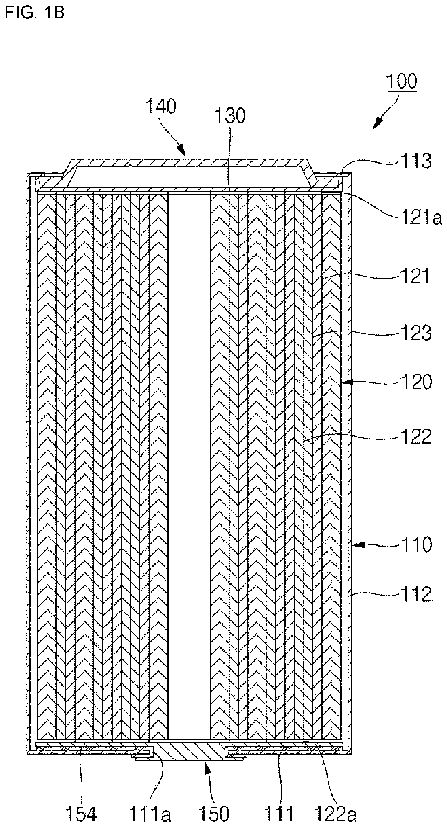

Referring to FIGS. 1A and 1B, a perspective view and a cross-sectional view illustrating an exemplary secondary battery 100 according to the present disclosure are shown.

As shown in FIGS. 1A and 1B, the exemplary secondary battery 100 according to the present disclosure may include a cylindrical can 110, a cylindrical electrode assembly 120, a first current collector plate 130, a first terminal portion 140, and a second terminal portion 150. In some examples, the secondary battery 100 may further include a center pin (not shown) coupled to the center of the electrode assembly 120.

The cylindrical can 110 may include a circular bottom portion 111 and a cylindrical side portion 112 bent and extended upward from the bottom portion 111. In some examples, the can 110 may include or be referred to as a case or housing. In some examples, the circular bottom portion 111 may include a substantially circular through hole 111a, and the side portion 112 may include a can curling portion 113 provided at an end (i.e., a top-end portion). In some examples, the can curling portion 113 may include or be referred to as a bent portion, a protrusion portion, or an extension portion. During the assembling process of the secondary battery 100, the top portion of the cylindrical can 110 may be opened. Therefore, during the assembling process of the secondary battery 100, the electrode assembly 120 may be inserted into the cylindrical can 110, and then an electrolyte may be injected into the cylindrical can 110. In some examples, the cylindrical can 110 may include steel, a steel alloy, nickel, a nickel alloy, aluminum, an aluminum alloy, or a combination thereof. In some examples, the can curling portion 113 of the cylindrical can 110 is bent inward around the first terminal portion 140 so as to prevent the electrode assembly 120 and the first terminal portion 140 from escaping to the outside.

The electrode assembly 120 may be accommodated inside the cylindrical can 110. In some examples, the electrode assembly 120 may include or be referred to as an electrode group, battery cell, or cell. The electrode assembly 120 may include a first electrode plate 121 coated with a first active material (e.g., graphite, carbon, etc.) on a first conductive substrate, a second electrode plate 122 coated with a second active material (e.g., a transition metal oxide (LiCoO₂, LiNiO₂, LiMn₂O₄, etc.)) on a second conductive substrate, and a separator 123 positioned between the first electrode plate 121 and the second electrode plate 122 to prevent a short circuit therebetween and to allow only the movement of lithium ions. In some examples, the first electrode plate 121, the separator 123, and the second electrode plate 122 may be stacked and wound into a substantially cylindrical shape. In some examples, the first substrate of the first electrode plate 121 may include copper (Cu), nickel (Ni), or an alloy of copper and nickel, the second substrate of the second electrode plate 122 may include aluminum (Al), and the separator 123 may include polyethylene (PE) or polypropylene (PP), respectively. In some examples, The first electrode plate 121 may be provided with a first non-coated portion 121a protruding and extending a certain length in a first direction (e.g., an upward direction), and the second electrode plate 122 may be provided with a second non-coated portion 122a protruding and extending a predetermined length in a second direction (e.g., a downward direction) opposite to the first direction. In some examples, the first non-coated portion 121a is a region extending in the first direction from the electrode assembly 120 and may be directly electrically connected to the first current collector plate 130, and the second non-coated portion 122a is a region extending in the second direction from the electrode assembly 120 and may be directly electrically connected to the second terminal portion 150. In some examples, an uncoated portion may include or be referred to as an electrode tab, a tab, an electrode lead, a lead, or a lead tab.

In some examples, the center pin is shaped of a hollow circular pipe and may be coupled to approximately the center of the electrode assembly 120. In some examples, the center pin may include steel, a steel alloy, aluminum, an aluminum alloy, or polybutylene terephthalate. The center pin serves to suppress deformation of the electrode assembly during charging and discharging of battery and serves as a passage for gas generated inside the secondary battery. In some cases, the center pin may be omitted.

The first current collector plate 130 may be directly electrically connected to the first uncoated portion 121a of the electrode assembly 120. In some examples, the first current collector plate 130 may be electrically connected to the first uncoated portion 121a through laser welding or ultrasonic welding. In some examples, the first current collector plate 130 may include copper (Cu), nickel (Ni), or an alloy of copper and nickel. The first current collector plate 130 will be described again below. In some examples, a current collector plate may include or be referred to as a current collector, a current collector, a conductive plate, or a conductor.

The first terminal portion 140 blocks the upper region of the can 110 and may be electrically connected to the first current collector plate 130. In some examples, the first terminal portion 140 may be coupled to the can curling portion 113 through the first current collector plate 130. In some examples, the first terminal portion 140 may include copper (Cu), nickel (Ni), or an alloy of copper and nickel. In some examples, the first terminal portion 140 can be either a negative electrode or a positive electrode. When the first terminal portion 140 is a negative electrode, the can 110 may also be a negative electrode, and when the first terminal portion 140 is a positive electrode, the can 110 may also be a positive electrode. The first terminal portion 140 will be described again below.

The second terminal portion 150 may be coupled to the can 10 and electrically connected to the second non-coated portion 122a of the electrode assembly 120. In some examples, the second terminal portion 150 may be directly electrically connected to the second uncoated portion 122a through laser welding or ultrasonic welding. In some examples, the second terminal portion 150 may include aluminum (Al) or an aluminum alloy. This second terminal portion 150 will be described again below. In some examples, the second terminal portion 150 can be either a negative electrode or a positive electrode. In some examples, a terminal portion may include or be referred to as a terminal, a protrusion or a conductor.

In this way, in the exemplary secondary battery 100 according to the present disclosure, the first uncoated portion 121a of the electrode assembly 120 is electrically connected to the first terminal portion 140 through the first current collector plate 130 without a separate lead tab. In addition, since the second non-coated portion 122a of the electrode assembly 120 is directly electrically connected to the second terminal portion 150, electrical resistance can be reduced. In addition, since the secondary battery 100 according to the present disclosure does not have a separate lead tab therein, a larger electrode assembly 120 can be used or accommodated, and thus battery capacity can be increased.

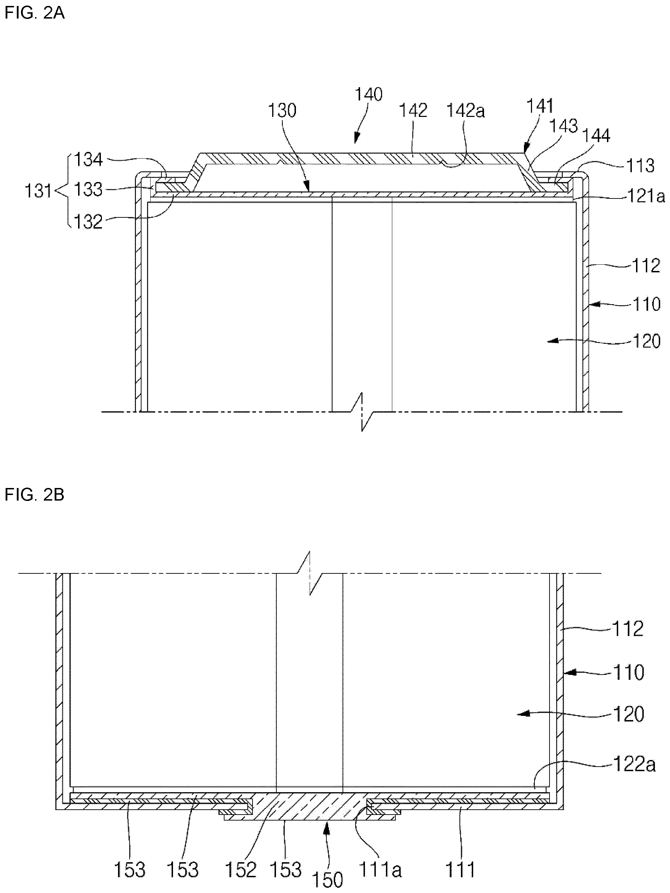

FIGS. 2A and 2B are enlarged cross-sectional views illustrating a first terminal portion and a second terminal portion of an exemplary secondary battery according to the present disclosure.

As shown in FIG. 2A, the first terminal portion 140 may include a cap-up 141. In some examples, the cap-up 141 includes a terminal region 142 protruding from the can 110 in a first direction, an inclined region 143 downwardly inclined from the terminal region 142 in an outward direction, and an extension region 144 horizontally extending outward from the inclined region 143. In some examples, the inclined region 143 may include at least one vent notch 142a formed on the bottom surface. When the internal pressure of the can 110 is higher than a reference pressure, the vent notch 142a may be broken and thus can reduce the internal pressure of the can 110. In some examples, the extension region 144 may be electrically directly connected to the first current collector plate 130. In some examples, the cap-up 141 may not have a gas discharge hole, unlike in the conventional cap-up. That is, the cap-up 141 may seal the can 110.

As described above, the can 110 may further include a can curling portion 113 provided in an inward direction. In some examples, the first current collector plate 130 may include a current-collector-plate curling portion 131 provided in an inward direction between the can curling portion 113 and the extension region 144 of the cap-up 141. In some examples, the current-collector-plate curling portion 131 may include a bottom region 132 covering the bottom surface of the extension region 144, a side region 133 covering the side surface of the extension region 144, and a upper region 134 covering the upper surface of the extension region 144.

In some examples, the current-collector-plate curling portion 131 may be exposed to the outside of the can 110 and the cap-up 141. In some examples, an upper region of the current-collector-plate curling portion 131 may be exposed to the outside.

In some examples, a resin for sealing may be further coated on upper regions of the can curling portion 113 and the current-collector-plate curling portion 131 to further improve battery sealing performance. In some examples, since the resin for sealing covers approximately the upper regions of the can curling portion 113 and the current-collector-plate curling portion 131, it is difficult for foreign matter to penetrate into the inside of the can 110, and it is also difficult for the electrolyte to leak out of the can 110. The resin for sealing may include or be referred to as a hydrophobic ceramic resin.

As shown in FIG. 2B, the second terminal portion 150 may include a current collecting surface 151, a pillar portion 152, and a terminal surface 153. The current collecting surface 151 may have a substantially disc shape to have an area corresponding to that of the second uncoated portion 122a of the electrode assembly 120. The second uncoated portion 122a may be electrically connected to the current collecting surface 151 by laser welding or ultrasonic welding. The pillar portion 152 may extend from the current collecting surface 151 and pass through the through hole 111a of the bottom surface 111 of the can 110. The terminal surface 153 may extend from the pillar portion 152 and be positioned outside the bottom surface 111 of the can 110. In some examples, the current collecting surface 151, the pillar portion 152, and the terminal surface 153 may be single bodies or may be manufactured separately and coupled to each other. In some examples, the second terminal portion 150 may further include an insulating portion 154 interposed between the second terminal portion 150 and the can 110. The insulating portion 154 may include or be referred to as a gasket or sealing. In some examples, a portion of the insulating portion 154 may be interposed between the current collecting surface 151 and the bottom surface of the can 110, another portion of the insulating portion 154 may be interposed between the terminal pillar and the through hole 111a in the bottom surface 111 of the can 110, and still another portion of the insulating portion 154 may be interposed between the terminal surface 153 and the bottom surface 111 of the can 110.

In this way, in the present disclosure, the first uncoated portion 121a of the electrode assembly 120 is electrically connected to the first terminal portion 140 through the first current collector plate 130 without a separate lead tab, and the second non-coated portion 122a is directly electrically connected to the second terminal portion 150, thereby providing a secondary battery 100 having reduced electrical resistance. In addition, in the present disclosure, since a separate lead tab is not provided, a relatively large electrode assembly 120 can be used, thereby providing a secondary battery 100 having increased battery capacity.

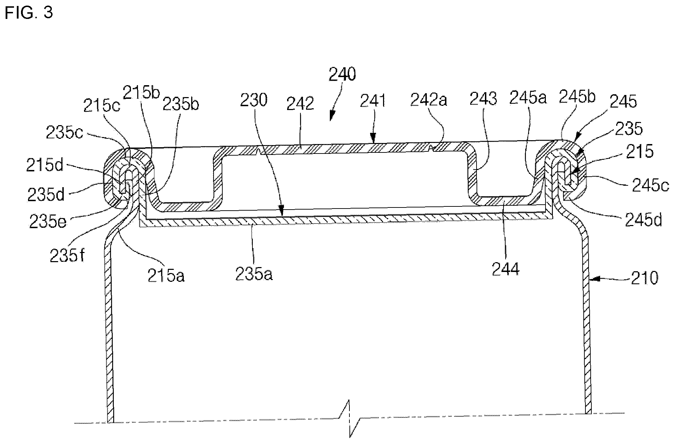

FIG. 3 is an enlarged cross-sectional view illustrating a terminal portion that can be applied to a positive electrode terminal or a negative electrode terminal of an exemplary secondary battery according to the present disclosure.

As shown in FIG. 3, the first terminal portion 240 may include a cap-up 241. In some examples, the cap-up 241 may include a terminal region 242, a vertical region 243, a horizontal region 244 and a cap-up seaming portion 245. In some examples, the terminal region 242 may further include at least one vent notch 242a provided on the bottom surface. The vertical region 243 may be provided by bending and extending substantially downward from the terminal region 242, and the horizontal region 244 may be provided by bending and extending substantially outwardly from the vertical region 243 in a horizontal direction.

In some examples, the can 210 may further include a can seaming portion 215, and the first current collector plate 230 may further include a current-collector-plate seaming portion 235. In some examples, the current-collector-plate seaming portion 235 may be provided between the cap-up seaming portion 245 and the can seaming portion 215.

In some examples, the cap-up seaming portion 245 may be generally bent outward. In some examples, the cap-up seaming part 245 may include a first vertical region 245a bent and extended in a substantially upward direction in the horizontal region 244, a first horizontal region 245b bent and extended in a substantially outward horizontal direction from the first vertical region 245a, a second vertical region 245c bent and extended substantially downward from the first horizontal region 245b, and a second horizontal region 245d extended substantially in an inner horizontal direction from the second vertical region 245c.

In some examples, the can seaming portion 215 may include an inclined portion 215a inclined or bent in an approximately inward and upward direction from the side portion of the can 210, a first vertical portion 215b bent and extended substantially upward from the inclined portion 215a, a horizontal portion 215c bent and extended in a substantially outward horizontal direction from the first vertical portion 215b, and a second vertical portion 215d bent and extended substantially downward from the horizontal portion 215c. In some examples, the first vertical portion 215b and the second vertical portion 215d may be spaced apart from each other by a predetermined distance (i.e., the thickness of the first current collector plate 230).

In some examples, the current-collector-plate seaming portion 235 may include a bottom region 235a, a first vertical region 235b bent and extended substantially upward from the bottom region 235a, a first horizontal region 235c extended in a substantially outward horizontal direction from the first vertical region 235b, a second vertical region 235d bent and extended in a substantially downward direction from the first horizontal region 235c, a second horizontal region 235e bent and extended in an approximately inward horizontal direction from the second vertical region 235d, and a third vertical region 235f extended substantially upward from the second horizontal region 235e. In some examples, the third vertical region 235f of the current-collector-**plate** seaming portion 235 may be interposed between the first vertical portion 215b and the second vertical portion 215d of the can seaming portion 215.

In this way, cap-up seaming portion 245, the current-collector-plate seaming portion 235, and the can seaming portion 215 may be provided together through a seaming process. Accordingly, the cap-up seaming portion 245, the current-collector-plate seaming portion 235, and the can seaming portion 215, may come together into close contact with or may contact one another.

In some examples, the terminal region 242 of the cap-up 241 and the upper surface of the first horizontal area 245b may form the same plane or a different plane, which may be determined according to the needs of an electronic device to which the secondary battery is coupled.

In addition, in some examples, the first terminal portion 240 may be provided instead of the second terminal portion 150. In some examples, the first terminal portion 140 or the second terminal portion 150 shown in FIGS. 2A and 2B may be replaced with the first terminal portion 240 shown in FIG. 3. In other words, various types of terminal portions shown in FIGS. 2A, 2B, and 3 may be selected and configured in various ways according to the needs of an electronic device to which a secondary battery is coupled.

What has been described above is only one embodiment for carrying out the present invention, and the present invention is not limited to the above-described embodiment. However, the technical spirit of the present disclosure lies in that anyone skilled in the art could make various changes, as claimed in the claims below, without departing from the gist of the present invention.

## Claims

1. A secondary battery comprising:
a can;
an electrode assembly accommodated in the can and including a first uncoated portion extending in a first direction and a second uncoated portion extending in a second direction opposite to the first direction;
a first current collector plate electrically connected to the first uncoated portion of the electrode assembly;
a first terminal portion coupled to the can and electrically connected to the first current collector plate; and
a second terminal portion coupled to the can and electrically connected to the second uncoated portion of the electrode assembly.

2. The secondary battery of claim 1, wherein the first terminal portion includes a cap-up, the can further includes a can curling portion provided in an inward direction, and the first current collector plate further includes a current-collector-plate curling portion provided in an inward direction between the can curling portion and the cap-up.

3. The secondary battery of claim 2, wherein the current-collector-plate curling portion covers a bottom surface of the cap-up, a side surface of the cap-up, and an upper surface of the cap-up.

4. The secondary battery of claim 2, wherein the current-collector-plate curling portion is exposed to the outside of the can and the cap-up.

5. The secondary battery of claim 2, wherein the cap-up includes a vent notch formed on the bottom surface.

6. The secondary battery of claim 1, wherein the first terminal portion is a negative electrode or a positive electrode.

7. The secondary battery of claim 1, wherein the first terminal portion includes a cap-up, the cap-up further includes a cap-up seaming portion provided in an outward direction, the can further includes a can seaming portion provided in an outward direction of an end portion, and the first current collector plate further includes a current-collector-plate seaming portion provided in an outward direction between the cap-up seaming portion and the can seaming portion.

8. The secondary battery of claim 7, wherein the current-collector-plate seaming portion covers an inner surface of the can seaming portion, a side surface of the can seaming portion, and an outer surface of the can seaming portion.

9. The secondary battery of claim 7, wherein the cap-up seaming portion covers an inner surface of the current-collector-plate seaming portion, a side surface of the current-collector-plate seaming portion, and an outer surface of the current-collector-plate seaming portion.

10. The secondary battery of claim 7, wherein the cap-up includes a vent notch formed on the bottom surface.

11. The secondary battery of claim 1, wherein the second terminal portion includes a current collecting surface having an area corresponding to that of the second non-coated portion of the electrode assembly, a pillar portion extending from the current collecting surface and penetrating the can, and a terminal surface extending from the pillar portion and located outside the can.

12. The secondary battery of claim 11, further comprising an insulating portion interposed between the second terminal portion and the can.

13. The secondary battery of claim 11, wherein the second terminal portion is a negative electrode or a positive electrode.
